# EUROPÄISCHE PATENTSCHRIFT

(11) **EP 2 921 752 B1**
(45) Veröffentlichungstag und Bekanntmachung des Hinweises auf die Patenterteilung: **22.08.2018**
(21) Anmeldenummer: 15000679.9
(22) Anmeldetag: 09.03.2015
(51) Int. Cl.: F16K 17/40, F16K 31/02

(54) **Unbetätigt geschlossene Ventilanordnung, insbesondere für Raumfahrtantriebssysteme**
Unactuated closed valve assembly, in particular for spaceflight drive systems
Système de vannes fermé au repos, en particulier pour des systèmes de propulsion spatiale

(30) Priorität: 12.03.2014 DE 102014003261
(43) Veröffentlichungstag der Anmeldung: 23.09.2015
(73) Patentinhaber: ArianeGroup GmbH, 82024 Taufkirchen (DE)
(72) Erfinder: Wolf, Markus, D-68163 Mannheim (DE); Maier, Thomas, D-74348 Lauffen (DE); Kraus, Stephan, D-74229 Oedheim (DE)
(74) Vertreter: Schicker, Silvia

(56) Entgegenhaltungen:
- US-A- 4 126 151
- US-A- 5 960 812
- US-A1- 2013 167 377

## Beschreibung

Die Erfindung betrifft eine Ventilanordnung, die in einer Rohrleitung für flüssige oder gasförmige Medien anordnenbar ist. Insbesondere betrifft die Erfindung eine einmalig betätigbare Ventilanordnung für ein Raumfahrttriebwerk. Die Ventilanordnung umfasst einen Einlass und einen Auslass, welche in einen Arbeitsraum der Ventilanordnung münden, sowie einen Aktuator. In einem nicht aktuierten Zustand des Aktuators ist ein Strömungsdurchgang zwischen dem Einlass und dem Auslass blockiert, was bedeutet, dass die Ventilanordnung geschlossen ist.

Ventile kommen allgemein dort zum Einsatz, wo beispielsweise eine Rohrleitung für flüssige oder gasförmige Medien geöffnet oder geschlossen werden muss. Im geschlossenen Zustand des Ventils muss durch dieses eine sehr geringe Leckrate sicher gestellt sein. Je nach Anwendung können die Ventile zur mehrfachen oder auch nur zur einfachen Betätigung vorgesehen sein, wobei letzteres z.B. in Antriebssystemen für Raumfahranwendungen der Fall ist.

Ein in einem Antriebssystem für Raumfahrtanwendungen eingesetztes Ventil dient bei Satelliten oder Raumsonden beispielsweise dazu, ein geschlossenes hydraulisches oder pneumatisches System mit seiner Umgebung zu verbinden. Ein solches Ventil muss in einem nicht aktuierten (angesteuertem) Zustand geschlossen sein. Dieser Zustand wird als "normally closed" (NC) bezeichnet. Dadurch können z.B. Treibstoff- oder Gasleitungen eines Antriebssystems am Ende einer Mission passiviert oder drucklos gemacht werden.

An die Zuverlässigkeit der Ansteuerung werden bei Raumfahrtanwendungen hohe Anforderungen gestellt, da eine Fehlfunktion einen großen Schaden oder sogar den Verlust des Antriebssystems verursachen kann.

Aus der US 2013/0167377 A1 ist eine Ventilanordnung zur einmaligen Betätigung bekannt, die in einer Rohrleitung für flüssige oder gasförmige Medien anordenbar ist. Die Ventilanordnung umfasst einen Einlass und einen gegenüber dem Einlass um 90° verdreht angeordneten Auslass, sowie einen Aktuator. Der Einlass und der Auslass münden in einen Arbeitsraum der Ventilanordnung. In einem nicht aktuierten (angesteuerten) Zustand des Aktuators ist ein Strömungsdurchgang zwischen dem Einlass und dem Auslass durch eine Kappe blockiert, die einstückig mit dem Einlass ausgebildet ist. Der Aktuator ist ein einmalig betätigbarer Formgedächtnisaktuator, der beim Erreichen einer von dessen Legierungszusammensetzung abhängigen Umwandlungstemperatur, welche durch eine steuerbare elektrische Heizvorrichtung der Ventilanordnung erzeugbar ist, seine äußere Form ändert und dabei die den Einlass von dem Auslass trennende Kappe von dem Einlass abreißt, wodurch der Einlass und der Auslass über den Arbeitsraum strömungstechnisch miteinander verbunden sind.

Eine diesem Prinzip folgende Anordnung ist ebenfalls aus der US 5,960,812 A bekannt. Auch hier werden zwei Körper, die den Durchgang zwischen Kanälen verschließen, durch Zerreißen voneinander getrennt, so dass irreversibel eine strömungstechnische Verbindung zwischen den Kanälen hergestellt ist.

Die US 4, 126, 151 offenbart ein Ventil für einen Tankwagen, das beim Übersteigen eines Ausmaßes eines Aufpralls öffnet, indem die auf einen schweren Körper des Ventils wirkende Kraft den Körper von dem Ventil abreißt.

Es ist Aufgabe der vorliegenden Erfindung eine baulich und/oder funktional zuverlässige Ventilanordnung zum Öffnen oder Schließen eines Ventils sowie ein entsprechendes Antriebssystem für Raumfahrtanwendungen anzugeben.

Diese Aufgabe wird gelöst durch eine Vorrichtung gemäß den Merkmalen des Anspruchs 1. Vorteilhafte Ausgestaltungen ergeben sich aus den abhängigen Ansprüchen.

Zur Lösung dieser Aufgabe wird eine Ventilanordnung zur einmaligen Betätigung vorgeschlagen, die in einer Rohrleitung für flüssige oder gasförmige Medien anordenbar ist. Insbesondere kann die Ventilanordnung in Raumfahrttriebwerken eingesetzt werden. Die Ventilanordnung umfasst einen Einlass und einen Auslass, sowie einen Aktuator. Der Einlass und der Auslass münden in einen Arbeitsraum der Ventilanordnung. In einem nicht aktuierten (angesteuerten) Zustand des Aktuators ist ein Strömungsdurchgang zwischen dem Einlass und dem Auslass blockiert. Dies bedeutet, die Ventilanordnung ist geschlossen, wenn der Aktuator nicht angesteuert wird oder ist. Der Aktuator ist ein einmalig betätigbarer Formgedächtnisaktuator oder umfasst einen Formgedächtnisaktuator, der beim Erreichen einer von dessen Legierungszusammensetzung abhängigen Umwandlungstemperatur, welche durch eine steuerbare elektrische Heizvorrichtung der Ventilanordnung erzeugbar ist, seine äußere Form sprunghaft ändert. Der Aktuator zerstört in dem Arbeitsraum bei Aktuierung ein den Einlass von dem Auslass trennendes Element irreversibel, wodurch der Einlass und der Auslass über den Arbeitsraum strömungstechnisch miteinander verbunden sind. Erfindungsgemäß mündet der Einlass in ein Rohrelement, das in dem Arbeitsraum derart angeordnet ist, dass das Rohrelement bei der Aktuierung (d.h. Ansteuerung) des Formgedächtnisaktors abgeschert wird, wodurch der Einlass und der Auslass über den Arbeitsraum strömungstechnisch miteinander verbunden sind. Alternativ kann der Auslass in das in dem Arbeitsraum angeordnete Rohrelement derart münden, dass das Rohrelement bei der Aktuierung des Formgedächtnisaktors abgeschert wird.

Mit anderen Worten ist das Rohrelement in dem Arbeitsraum angeordnet und wird in diesem zerstört, um die Ventilanordnung zu öffnen.

Die Verwendung eines Formgedächtnisaktors als oder in einem Aktuator ermöglicht die einmalige und irreversible Ansteuerung, d.h. Öffnung, des Ventils. Die Ansteuerung erfolgt, indem der Formgedächtnisaktor durch die von außen, d.h. von der Heizvorrichtung, zugeführte Energie erwärmt wird, wodurch dieser, insbesondere sprunghaft, seine Größe verändert (d.h. sich z.B. ausdehnt) und dadurch das den Einlass von dem Auslass trennende Rohrelement mechanisch zerstört. Die mechanische Zerstörung des Rohrelements erfolgt durch Abscheren des Rohrelements.

Mit der Aktuierung durch Zufuhr thermischer Energie kehrt der Formgedächtnisaktuator in seine ursprüngliche Form zurück. Die Zufuhr thermischer Energie bis zu oder über eine sog. Übergangstemperatur (engl: transition temperature) ermöglicht z.B. eine Ausdehnung des Aktuators unter Bereitstellung hoher Kräfte (im Bereich einiger kN).

Als Material für den Formgedächtnisaktuator kann z.B. eine Nickel-TitanLegierung (NiTi) verwendet werden. Eine übliche Übergangstemperatur liegt bei solchen Formgedächtnisaktuatoren bei ca. 70°C bis 80°C. Für Raumfahrtanwendungen ist es grundsätzlich zweckmäßig, wenn ein Material mit einer höheren Übergangstemperatur, z.B. zwischen 100°C bis 120°C, zum Einsatz kommt. Dadurch kann eine unbeabsichtigte Auslösung des Aktuators aufgrund ungünstiger Randbedingungen zuverlässiger vermieden werden. Die höhere Übergangstemperatur kann z.B. durch eine Vorspannung (engl.: pre-stressing) des Aktuators und durch Legierung mit Refraktärmetallen oder Metallen aus der Platingruppe zu der NiTi-Legierung erreicht werden.

Die Betätigungsfunktion des Aktuators ist mit hoher Zuverlässigkeit bereitstellbar. Zur Betätigung, d.h. Öffnung, des Ventils sind neben dem (Formgedächtnis-) Aktuator und der Heizvorrichtung keine weiteren mechanischen oder pyrotechnischen Elemente erforderlich, wodurch die Ventilanordnung einen einfachen mechanischen und damit robusten Aufbau aufweist. Die Ventilanordnung lässt sich mit wenigen Komponenten herstellen. Die Vorrichtung lässt sich mit geringem Gewicht bereitstellen.

Die Ventilanordnung ähnelt im Ergebnis in ihrer Funktion einem pyrotechnischen Ventil, weist gegenüber diesem jedoch eine einfachere Ansteuerung sowie eine längere Haltbarkeit auf. Darüber hinaus weist die Ventilanordnung vor der Ansteuerung (Aktuierung) keine Verluste durch Leckage auf.

In einer Ausgestaltung der Ventilanordnung grenzt der Formgedächtnisaktuator im nicht aktuierten Zustand zumindest abschnittsweise an das Rohrelement, wodurch die Formänderung des Formgedächtnisaktuators zu einem Abscheren des Rohrelements durch den Formgedächtnisaktuator selbst führt. Vor der Aktuierung kann der Formgedächtnisaktuator an dem Rohrelement z.B. anliegen oder einen geringen Abstand zu dem Rohrelement aufweisen. Die von dem Formgedächtnisaktuator bei der Aktuierung ausgeführte Formänderung führt dann zu der gewünschten Scherung des Rohrelements.

In einer anderen Ausgestaltung der Ventilanordnung grenzen ein oder mehrere Zwischenteile zumindest abschnittsweise an das Rohrelement im nicht aktuierten Zustand, so dass die Formänderung des Formgedächtnisaktuators auf das oder die Zwischenteile übertragbar ist, wodurch das Rohrelement durch zumindest eines der Zwischenteile abscherbar ist. Die Formänderung des aktuierten Formgedächtnisaktuators wird auf andere Komponenten übertragen, wobei dann eine der Komponenten die Scherung des Rohrelements durchführt. Diese Variante ermöglicht größere Freiheitsgrade bei der Konstruktion des Aktuators. So kann beispielsweise eine Kraftübersetzung realisiert werden und/oder das Volumen des Aktuators optimiert werden. Das Zwischenteil kann z.B. in Gestalt eines Ventilkolbens ausgebildet sein.

Das Rohrelement kann in einer Längsrichtung der Ventilanordnung angeordnet sein, wobei die von dem Formgedächtnisaktuator erzeugbare Kraft quer zu der Längsrichtung verläuft. Dies erzeugt maximale Scherkräfte beim Aktuieren des Formgedächtnisaktuators, wodurch die Zuverlässigkeit des Schervorgangs optimiert ist. "Quer" bedeutet, dass die Kraft in einer Ebene verläuft, welche in etwa senkrecht zu der Längsrichtung ist.

Das Rohrelement kann in einer Längsrichtung der Ventilanordnung angeordnet sein, wobei die von dem Formgedächtnisaktuator erzeugbare Kraft drehend um eine Achse verläuft, welche quer zu der Längsrichtung verläuft. "Quer" bedeutet auch hier, dass die Kraft in einer Ebene verläuft, welche in etwa senkrecht zu der Längsrichtung ist. Das Abscheren erfolgt durch eine Drehbewegung des Formgedächtnisaktuators oder eines optionalen Zwischenteils. Der Aktuator kann zu diesem Zweck vor der Aktuierung bereits kraft- und/oder formschlüssig mit dem Rohrelement verbunden sein. Der Aktuator kann im nicht aktuierten Zustand einen (geringen) Abstand zu dem Rohrelement aufweisen.

Der Arbeitsraum kann ein Aufnahmevolumen für die abgescherten Teile des Rohrelements umfassen. Das Aufnahmevolumen kann außerhalb eines Hauptströmungswegs des gasförmigen oder flüssigen Mediums liegen, so dass durch die Aktuierung des (Formgedächtnis-)Aktuators abgescherte Teile nicht in Richtung des Auslasses gezogen werden und diesen unter Umständen verstopfen oder nach außen gelangen.

Das Rohrelement kann durch eine Sacklochbohrung des Einlasses gebildet sein, welche von einer von dem Arbeitsraum abgewandten Seite in einen endseitigen Boden des Einlasses eingebracht ist. Dies ermöglicht eine einfache Fertigung. Es ermöglicht die einfache Festlegung der für das Scheren erforderlichen Kräfte durch die nach der Erzeugung der Sacklochbohrung verbleibende Wandstärke des Rohrelements.

Der Boden und der Aktuator oder der Boden und eines oder mehrere der Zwischenteile können in Längsrichtung voneinander beabstandet sein. Hierdurch ist sichergestellt, dass nach dem Schervorgang die am Einlass erzeugte Öffnung nicht durch den Aktuator verschlossen wird. Je nach Aktuatorausgestaltung, können der Aktuator oder das Zwischenteil auch angrenzend zu dem Boden vorgesehen sein. Hier muss durch die Aktuatorausgestaltung sichergestellt sein, dass nach dem Schervorgang die am Einlass erzeugte Öffnung nicht durch eine Aktuatorkomponente verschlossen wird.

Der Formgedächtnisaktuator kann z.B. eine Feder oder eine Hülse sein, welche sich bei Erreichen der Umwandlungstemperatur ausdehnt. Die Feder oder Hülse kann dann z.B. einen Bolzen oder ein ähnliches Bauteil antreiben, durch das die Scherung bewirkt wird.

In dem Arbeitsraum kann (aus Sicht des Arbeitsraums) vor dem Auslass oder vor dem Einlass (wenn der Auslass in das Rohrelement mündet) eine Blende angeordnet sein. Durch die Blende kann bei geöffnetem Ventil der Durchsatz des gasförmigen oder flüssigen Mediums eingestellt werden.

Das Rohrelement kann monolithisch mit dem Einlass oder dem Auslass (wenn der Auslass in das Rohrelement mündet) verbunden sein. Hierdurch weist die Ventilanordnung eine exzellente Dichtheit vor der Betätigung des Aktuators auf. Die Dichtheit ist dabei unabhängig von der Länge eines Zeitraums bis zu einer Ansteuerung des Aktuators immer gegeben. Die monolithische, d.h. einteilige, Ausbildung von Einlass bzw. Auslass und Rohrelement ermöglicht einen Verzicht auf einen Dichtsitz und ein dazu bewegliches Ventilglied. Dadurch kann auch der Aufbau der Ventilanordnung einfach gehalten werden.

Das Rohrelement kann einen kleineren oder höchstens gleichgroßen Querschnitt wie der Einlass oder der Auslass (wenn der Auslass in das Rohrelement mündet) aufweisen. Durch das Verhältnis der Durchmesser von Rohrelement und Einlass oder Auslass können z.B. die für das Abscheren oder zerreissen notwendigen Kräfte festgelegt werden. Umso kleiner der Durchmesser des Rohrelements im Verhältnis zum Einlass bzw. Auslass ist, desto geringere Scherkräfte sind notwendig.

Es wird ferner ein Antriebssystem für eine Raumfahrtanwendung vorgeschlagen, das zumindest eine Ventilanordnung der oben beschriebenen Art aufweist. Das Antriebsystem weist die gleichen Vorteile auf, wie diese in Verbindung mit der oben beschriebenen Ventilanordnung genannt wurden.

Zusammenfassend wird vorgeschlagen, die durch Ansteuerung eines Formgedächtnisaktuators freiwerdenden Kräfte zum Zerstören eines Rohrelements zu nutzen, um ein einmalig betätigbares (Evakuierungs-)Ventil bereit zu stellen.

Die vorgeschlagene Ventilanordnung weist eine Reihe von Vorteilen auf:
- Die Ventilanordnung weist eine geringe Komplexität auf.
- Die Ventilanordnung kann mit einer geringen Masse bereit gestellt werden, was den Einsatz in Raumfahrtanwendungen begünstigt.
- Die Ventilanordnung weist konstruktionsbedingt eine exzellente Dichtheit vor Betätigung über einen beliebig langen Zeitraum auf. Dies wird z.B. durch den monolithisch ausgebildeten Einlass mit dem Rohrelement ermöglicht.
- Die Ventilanordnung weist eine sichere Funktion auf, welche durch die Dimensionen des Rohrelements (z.B. in Gestalt eines Kapillarrohrs, das durch Scherung zerstört werden soll oder durch die Ausgestaltung der Sollbruchstelle) ausgelegt für Hochdruckanwendungen realisiert werden kann.
- Die Ventilanordnung ermöglicht eine leichte Dimensionierbarkeit für einen erforderlichen Massenstrom im geöffneten Zustand.
- Die Ventilanordnung weist eine hohe Langlebigkeit auf, da auf eine pyrotechnische Ladung mit begrenzter Lebensdauer verzichtet werden kann. Damit verbunden ergibt sich keine Induzierung eines pyrotechnischen Schocks während der Betätigung der Ventilanordnung.
- Es existieren geringe Anforderungen an eine Steuerelektronik. Insbesondere sind keine Ventiltreiber oder zusätzliche Steuerungen erforderlich.
- Es existieren geringe Anforderungen an Umweltbedingungen bei der Lagerung, insbesondere relaxierte Temperaturanforderungen im Vergleich zu pyrotechnischen Ventilen.

Das Ventil kann somit durch seine bauartbedingten Vorteile im Gegensatz zu den I heute sich im Einsatz befindlichen Ventilen in Raumfahrtanwendungen zu erheblichem Mehrwert in einem Antriebsystems führen, insbesondere am Ende der Mission zur Passivierung eines Satellitenantriebssystems.

Die Erfindung wird nachfolgend näher anhand eines Ausführungsbeispiels in der Zeichnung beschrieben. Es zeigen:
- Fig. 1: ein erstes Ausführungsbeispiel einer erfindungsgemäßen Ventilanordnung gemäß einer ersten Variante, bei der ein Aktuator durch einen Formgedächtnisaktuator gebildet ist,
- Fig. 2: ein zweites Ausführungsbeispiel einer erfindungsgemäßen Ventilanordnung gemäß der ersten Variante, bei der der Aktuator einen Formgedächtnisaktuator umfasst, und
- Fig. 3: ein Ausgestaltungsbeispiel einer sog. "Zero-Thrust"-Düse, durch die beim Öffnen der Ventilanordnung kein Schub entsteht.

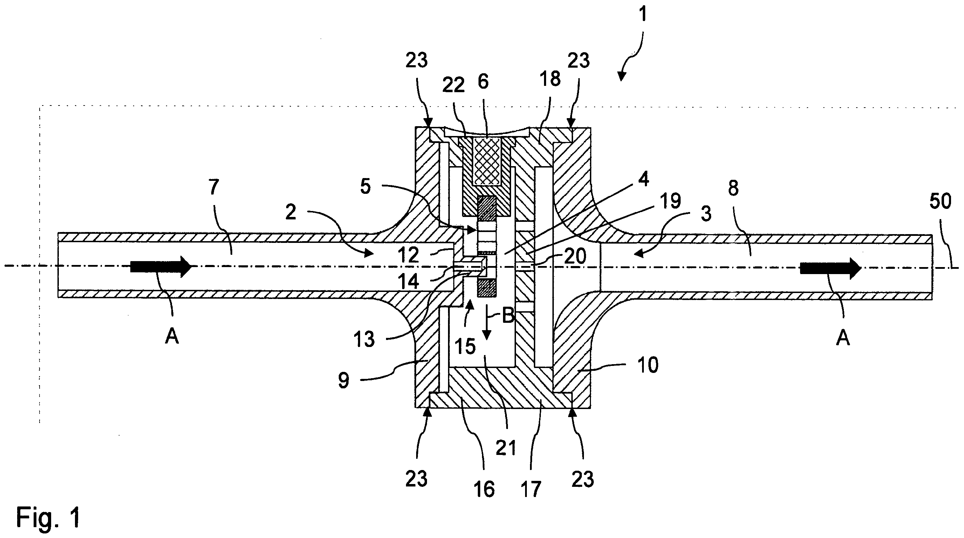

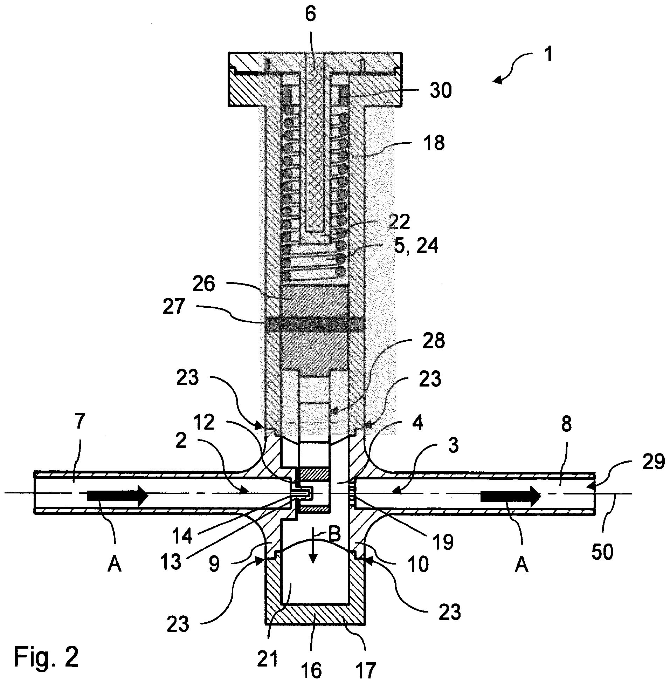

Fig. 1 zeigt eine erfindungsgemäße Ventilanordnung 1 (kurz: Ventil) gemäß einer ersten Variante, dessen "Schaltzustand" von einem Formgedächtnisaktor 5 einmalig veränderbar ist. Das Ventil kann z.B. in Antriebssystemen für Raumfahrtanwendungen zum Einsatz kommen, z.B. um bei Satelliten und Raumsonden ein geschlossenes hydraulisches oder pneumatisches System mit seiner Umgebung zu verbinden. Das Ventil 1 ist hierzu in einem nicht aktuierten (angesteuertem) Zustand geschlossen. Dieser Zustand wird als "normally closed" (NC) bezeichnet. Die Fig. 1 und 2 zeigen das erfindungsgemäße Ventil im nicht aktuierten Zustand.

Der Einlass 2 ist durch ein Einlassrohr 7, der Auslass 3 durch ein Auslassrohr 8 gebildet. Das Einlassrohr 7 kann mit einer weiteren Rohrleitung, beispielsweise eines Raumfahrttriebwerks (allgemein: einem System), verbunden sein oder werden. Das Auslassrohr 8 ist mit seinem, von dem Ventil 1 abgewandten Ende 29, mit der Umgebung verbunden. Das Einlassrohr 7 und das Auslassrohr 8 erstrecken sich entlang einer Längsachse 50. Ein jeweiliges ventilseitiges Ende des Einlassrohrs 7 und des Auslassrohrs 8 münden in einen Arbeitsraum 4 des Ventils.

Das Einlassrohr 7 weist an einer ventilseitigen Wandung 12 (Boden) ein durch eine Sacklochbohrung 14 gebildetes Rohrelement 13 auf. Sowohl die Wandung 12 als auch das Rohrelement 13 liegen im Inneren des Arbeitsraums 4 des Ventils 1. Das Rohrelement 13 weist gegenüber dem Einlassrohr 7 einen kleineren Querschnitt auf. Das Rohrelement 13 bildet eine Schersektion aus. Durch den kleineren Querschnitt des Rohrelements 13 gegenüber dem Einlassrohr 7 können hohe Betriebsdrücke realisiert werden. Gleichzeitig werden die erforderlichen Scherkräfte festgelegt bzw. ausreichend klein gehalten. Das Rohrelement 13 kann dazu z.B. als Kapillare ausgebildet sein. Das Rohrelement 13 und das Einlassrohr 7 sind monolithisch, d.h. einteilig, ausgebildet. Im unbetätigten (nicht aktuierten) Zustand des Ventils 1 ist damit der Strömungsdurchgang des Mediums in Richtung des Pfeils A von dem Einlass 2 zu dem Arbeitsraum 4 blockiert. Die einteilige Ausgestaltung gewährleistet auch über lange Zeiträume eine sehr gute Dichtheit.

Das ventilseitige Ende des Auslassrohrs 8 ist demgegenüber strömungstechnisch mit dem Arbeitsraum 4 des Ventils 1 verbunden. Das ventilseitige Ende des Auslassrohrs 8 ist über eine, in dem Arbeitsraum 4 angeordnete, Blende 19 mit dem Arbeitsraum 4 gekoppelt. In der Blende 19 ist eine Anzahl an Ausnehmungen 20, beispielsweise in Gestalt von Bohrungen, vorgesehen. Im geöffneten Zustand des Ventils kann durch die Blende 19 der Durchsatz eines Gas-oder flüssigen Mediums, das durch das Ventil 1 strömt, festgelegt werden.

Der Arbeitsraum 4 des Ventils 1 ist durch Flansche 9, 10 des Einlassrohrs 7 und des Auslassrohrs 8 sowie ein, einen Boden 17 und einen Deckel 18 umfassendes Ventilgehäuseteil 16 begrenzt. Die Gesamtheit der genannten Komponenten stellt ein Gehäuse des Ventils 1 dar. Die bereits erwähnte Blende 19 ist in diesem Ausführungsbeispiel integraler Bestandteil des Ventilgehäuseteils 16, was jedoch nicht zwingend ist. Die genannten Komponenten können in den, mit dem Bezugszeichen 23 gekennzeichneten Kontaktbereichen miteinander verschweißt sein, um einen gas- und fluiddichten Innenraum bereitzustellen.

Es versteht sich, dass das Gehäuse des Ventils 1 auch auf andere Art und Weise gebildet sein kann. Insbesondere ist es nicht erforderlich, dass die seitlichen Wandlungen des Ventils durch die Flansche 9, 10 des Ein- und Auslassrohrs 7, 8 gebildet sind. Stattdessen könnte das Gehäuse des Ventils 1 auch getrennt von den Rohren 7, 8 hergestellt sein.

Durch den Deckel 18 des Ventilgehäuseteils 16 ist ein Wärmeübertrager 22 in das Innere des Arbeitsraums 4 geführt. Im Inneren des Wärmeübertragers 22 ist eine Heizvorrichtung 6 angeordnet, welche mit einer nicht dargestellten Spannungsquelle verbunden ist und im Betrieb den Wärmeübertrager 22 erwärmt. Der Wärmeübertrager 22 ist mit dem Formgedächtnisaktuator 5 wärmeleitend verbunden.

Der Formgedächtnisaktuator 5 erstreckt sich in Blattebene senkrecht zur Längsachse 50, wobei er in dem gezeigten Ausführungsbeispiel das Rohrelement 13 umgibt. Dabei ist zwischen der, dem Arbeitsraum 4 zugewandten Seite des Bodens 12 des Einlassrohrs 7 und dem Formgedächtnisaktuator 5 ein (lediglich optionaler) Abstand 15 gebildet.

Bei dem in Fig. 1 dargestellten Ausführungsbeispiel erfolgt eine direkte Betätigung des Ventils 1 durch den Formgedächtnisaktuator 5. Dies bedeutet, die Formänderung des Formgedächtnisaktuators 5 führt direkt zu einer Scherung des Rohrelements 13.

Zum Öffnen des Ventils 1 wird der Formgedächtnisaktuator 5 mittels der Heizvorrichtung 6 erwärmt. Bei Erreichen der von der Legierung des Formgedächtnisaktuators 5 abhängigen Umwandlungstemperatur erfolgt eine sprunghafte Formänderung des Formgedächtnisaktuators 5, welche zum Scheren des Rohrelement 13 genutzt wird. Je nach Ausgestaltung des Formgedächtnisaktuators 5 kann diese Bewegung längs des Pfeiles B in Blattebene senkrecht zu der Längsrichtung 50 erfolgen. Denkbar wäre auch eine seitliche, drehende Bewegung, welche das Rohrelement 13 abschert.

Nach dem Öffnen des Ventils ist das Rohrelement 13 von dem Boden 12 des Einlassrohr 7 abgetrennt, wodurch eine Strömungsdurchgang zwischen dem Einlassrohr 7 und dem Arbeitsraum 4 gegeben ist. Ein abzulassendes Medium kann nun von dem Einlassrohr 7 über den Arbeitsraum 4 durch das Auslassrohr 8 strömen, bis das mit dem Einlassrohr 7 verbundene System (nicht dargestellt) auf Umgebungsdruck ist. Durch die optional vorgesehene Blende 19 im Inneren des Arbeitsraumes 4 (oder alternativ am Eingang des Auslassrohrs 8) kann der Strömungsdurchsatz des Mediums begrenzt werden. Der Durchsatz hängt von der Anzahl und Größe der in der Blende vorgesehenen Ausnehmungen 20 ab.

Das abgescherte Rohrelement 13 fällt in ein Aufnahmevolumen 21 am Boden des Arbeitsraumes 4. Dadurch verbleiben die abgescherten Teile im Inneren des Arbeitsraumes 4. Da das Aufnahmevolumen 21 ein im Vergleich tieferes Niveau als die Unterseite des Auslassrohrs 8 aufweist, verbleiben die abgescherten Teile des Rohrelements 13 im Inneren des Arbeitsraums 4 und gelangen nicht stromabwärts, d.h. in Richtung des Auslassrohres 8, nach außen. Ebenso kann durch diese Konfiguration eine Verstopfung der Ausnehmungen 20 der Blende 19 bzw., bei nicht vorhandener Blende, des Auslassrohres 8 vermieden werden.

Der Abstand 15, der in Fig. 1 zwischen der, dem Arbeitsraum 4 zugewandten Seite des Bodens 12 des Einlassrohrs 7 und dem Formgedächtnisaktuator 5 gebildet ist, stellt sicher, dass der Formgedächtnisaktuator 5 nach dessen Aktuierung den nach der Scherung im Boden 12 erzeugten Durchgang nicht blockiert. Diese Situation kann auch durch konstruktive Maßnahmen des Formgedächtnisaktuators 5 verhindert werden, so dass der Abstand (Spalt) 15 nicht zwingend ist.

Die in Fig. 2 dargestellte, erfindungsgemäße Ventilanordnung unterscheidet sich von dem in Fig. 1 gezeigten Ausführungsbeispiel durch eine indirekte Betätigung des Ventils 1. Die Formänderung des Formgedächtnisaktuators 5 wird allgemein indirekt über ein Zwischenteil oder eine Baugruppe übertragen, wobei eines der Zwischenteile oder der Baugruppe die Scherung des Rohrelements 13 übernimmt.

In dem, in Fig. 2 dargestellten, Ausführungsbeispiel ist der Formgedächtnisaktuator 5 beispielhaft als Feder 24 ausgeführt. Die Feder 24 ist hier eine Spiralfeder, die den Wärmeübertrager 22 umgibt. Die Feder 24 ist zusammen mit dem Wärmeübertrager in dem hier rohrförmigen Gehäuseteil 18 angeordnet. An einem von dem Arbeitsraum 4 abgewandten Ende stützt sich die Feder 24 an einer Fixierplatte 30 ab, welche fest mit dem rohrförmigen Gehäusebauteil 18 verbunden ist. Die Feder 24 wird durch die Heizvorrichtung 6, welche im Inneren des Wärmeübertragers 22 auf einer Längsachse der Feder 24 angeordnet ist, erwärmt. Beim Erreichen der Umwandlungstemperatur erfolgt eine Formänderung, die zu einer Ausdehnung der Feder 24 in Blattrichtung nach unten führt. Die dabei in Richtung des Pfeils B auftretende Kraft wird auf einen Ventilkolben 26 als Zwischenteil 24 übertragen. Der Ventilkolben 26 ist mit einem das Rohrelement 13 umgebenden Verlängerungsteil 28 verbunden, welches sich von dem Ventilkolben 26 in Richtung des Pfeils B erstreckt. Zur Sicherung des Ventilkolbens 26 vor der Aktuierung des Formgedächtnisaktuators 5 kann ein optional vorhandener Sicherungsbolzen 27 (als weiteres Zwischenteil) in dem rohrförmigen Gehäusebauteil 18 vorgesehen sein. Sobald die, aufgrund der sprunghaften Formänderung des Formgedächtnisaktuators 5 auftretende Kraft die Scherfestigkeit des Sicherungsbolzens 27 übersteigt, setzt sich der Ventilkolben 26 in Pfeilrichtung B in Bewegung und schert das Rohrelement 13 am Ende 12 des Einlassrohrs 7 ab.

Nach dem Öffnen des Ventils 1 kann das abzulassende Medium nun durch den Arbeitsraum 4 und das Auslassrohr 5 strömen, bis das mit dem Einlassrohr 7 verbundene System (nicht dargestellt) auf Umgebungsdruck ist. Hierbei kann wiederum der Durchsatz durch die optional vorgesehene Blende 19 im Arbeitsraum 4 oder im Auslassrohr 8 begrenzt werden. Die Gestaltung des Arbeitsraums 4 bzw. des den Arbeitsraum 4 begrenzenden Gehäuses ist wiederum derart, dass die abgescherten Teile des Rohrelements 13 im Inneren des Arbeitsraums 4 des Ventils 1 verbleiben und nicht nach außen bzw. stromabwärts gelangen können.

Wird das vorgeschlagene Ventil 1 zum Passivieren von Systemen einer Raumfahrtanwendung eingesetzt, so darf das aus dem Auslassrohr 8 ausströmende Medium keine Kräfte und Momente erzeugen. Dies kann durch einen sog. "Zero-Force"-Auslass (nicht dargestellt) erreicht werden. Ein Zero-Force-Auslass weist einen oder mehrere Öffnungen auf, die ein symmetrisches Entweichen des Mediums aus dem Auslassrohr 8 ermöglichen. Dadurch wird kein Schubvektor bzw. kein Moment, das auf den Satelliten oder das Raumfahrzeug wirkt, erzeugt. Alternativ kann ein solcher Zero-Force-Auslass an einer geeigneten Stelle einer Raumfahrkomponente angebracht werden, die dann über ein Rohr mit dem Auslass des Ventils verbunden ist.

Um sicherzustellen, dass der Aktuator 5 fest zwischen der Auflageschulter 16c und der Auflagefläche 42 des Abschlussteils 40 verspannt ist, ist das Abschlussteil 40 über eine Mutter 41, welche in den zweiten, dünnen Schaftabschnitt 34 eingreift, fixiert. Diese Mutter 41 kann für eine Raumfahrtanwendung zum Beispiel mit Sicherungsdraht gesichert werden. Sie kann auch durch eine Schweißverbindung ersetzt werden.

Wird die Heizvorrichtung nun aktiviert, so fängt der Aktuator 5 nach Erreichen seiner Übergangstemperatur an sich auszudehnen. Da der Aktuator 5 die sich aufgrund der Längenänderung ergebende Kraft durch die Abstützung an der Schulter 16c in das Abschlussteil 40 einleitet, wird der Schaft 32 in der Zeichenebene nach rechts bewegt, bis schließlich die Sollbruchstelle (Materialschwächung 31) plötzlich reißt. Hierdurch ist in dem Arbeitsraum 4 ein Durchgang zwischen dem Einlass 2 und dem Auslass 3 geschaffen, so dass eine Entlüftung des mit dem Einlass 2 verbundenen Volumens über den Auslass erzielt werden kann.

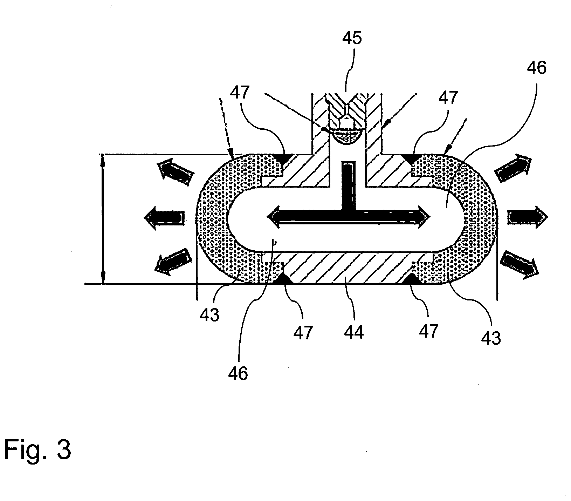

Um sicherzustellen, dass beim Öffnen der Ventilanordnung 1 kein Schub entsteht, kann mit dem Auslass 3 der in den Fig. 1 bis 2 gezeigten Ausführungsbeispiele eine sog. "Zero-Thrust"-Düse verbunden werden. Diese ist beispielhaft in Fig. 3 dargestellt. Ein Einlasskanal 45 wird dabei mit dem Auslass 3 der Ventilanordnung 1 verbunden. Am Strömungsausgang ist die Düse mit einem T-Stück 44 verbunden. Ein jeweiliges Ende des T-Stücks 44 stellt einen Auslasskanal 46 dar. Mit den Auslasskanälen 46 sind kugelförmige Halbschalen 43 aus einem porösen Material verbunden. Die Verbindung zwischen den Halbschalen 43 und dem T-Stück 44 kann über eine Schweißverbindung 47 realisiert sein. Durch die Eigenschaften der Halbschalen 43 ist sichergestellt, dass das über die Düse entweichende Medium gleichförmig in alle Raumrichtungen entweicht, so dass im Ergebnis kein Schub auftritt. Diese Halbschalen 43 können zum Beispiel aus Sintermetall gefertigt sein.

### BEZUGSZEICHENLISTE

- 1: Ventilanordnung
- 2: Einlass
- 3: Auslass
- 4: Arbeitsraum
- 5: (Formgedächtnis-)Aktuator
- 6: Heizvorrichtung
- 7: Einlassrohr
- 8: Auslassrohr
- 9: Flansch/Schulter des Einlassrohrs 7
- 10: Flansch/Schulter des Auslassrohrs 8
- 12: Wandung (Boden) des Einlassrohrs 7
- 13: Rohrelement
- 14: Sacklochbohrung
- 15: Abstand zwischen Rohrelement 13 und Aktuator 5 bzw. Zwischenteil
- 16: Ventilgehäuseteil
- 16a: Bohrung
- 16b: Auflagefläche
- 16c: Schulter
- 17: Boden
- 18: Deckel
- 19: Blende
- 20: Ausnehmung (Bohrung)
- 21: Aufnahmevolumen
- 22: Wärmeübertrager
- 23: Verschweißung
- 24: Feder
- 26: Ventilkolben (Zwischenteil)
- 27: Sicherungsbolzen(Zwischenteil)
- 28: Verlängerungsteil (Zwischenteil)
- 29: Ausgangsseitiges Ende des Auslassrohres 8
- 30: Fixierplatte
- 43: gasdurchlässige poröse Halbschale
- 44: T-Stück
- 45: Einlasskanal
- 46: Auslasskanal
- 47: Schweißverbindung
- A: Strömungsrichtung eines gasförmigen oder flüssigen Mediums
- B: Bewegungsrichtung des Aktuators

## Patentansprüche

1. Ventilanordnung, insbesondere für ein Raumfahrttriebwerk, zur einmaligen Betätigung, die in einer Rohrleitung für flüssige oder gasförmige Medien anordenbar ist, umfassend einen Einlass (2) und einen Auslass (3), welche in einen Arbeitsraum (4) der Ventilanordnung münden, sowie einen Aktuator (5), wobei in einem nicht aktuierten Zustand des Aktuators (5) ein Strömungsdurchgang zwischen dem Einlass (2) und dem Auslass (3) blockiert ist, bei der
- der Aktuator (5) ein einmalig betätigbarer Formgedächtnisaktuator ist oder einen Formgedächtnisaktuator umfasst, der beim Erreichen einer von dessen Legierungszusammensetzung abhängigen Umwandlungstemperatur, welche durch eine steuerbare elektrische Heizvorrichtung (6) der Ventilanordnung erzeugbar ist, seine äußere Form sprunghaft ändert; und
- der Aktuator (5) in dem Arbeitsraum (4) bei Aktuierung ein den Einlass (2) von dem Auslass (3) trennendes Element (13) irreversibel zerstört, wodurch der Einlass (2) und der Auslass (3) über den Arbeitsraum (4) strömungstechnisch miteinander verbunden sind;
**dadurch gekennzeichnet, dass**
der Einlass (2) oder der Auslass (3) in ein Rohrelement (13) mündet, das in dem Arbeitsraum (4) derart angeordnet ist, dass das Rohrelement (13) bei der Aktuierung des Formgedächtnisaktuators abgeschert wird.

2. Ventilanordnung nach Anspruch 1, bei der der Formgedächtnisaktuator zumindest abschnittsweise an das Rohrelement (13) im nicht aktuierten Zustand grenzt, wodurch die Formänderung des Formgedächtnisaktuators zu einem Abscheren des Rohrelements (13) durch den Formgedächtnisaktuator selbst führt.

3. Ventilanordnung nach einem der vorhergehenden Ansprüche, bei der ein oder mehrere Zwischenteile (26, 27, 28) zumindest abschnittsweise an das Rohrelement (13) im nicht aktuierten Zustand grenzen, so dass die Formänderung des Formgedächtnisaktuators auf das oder die Zwischenteile (26, 27, 28) übertragbar ist, wodurch das Rohrelement (13) durch zumindest eines der Zwischenteile (26, 27, 28) abscherbar ist.

4. Ventilanordnung nach einem der vorhergehenden Ansprüche, bei der das Rohrelement (13) in einer Längsrichtung (50) der Ventilanordnung angeordnet ist, wobei die von dem Formgedächtnisaktuator erzeugbare Kraft quer zu der Längsrichtung (50) verläuft.

5. Ventilanordnung nach einem der vorhergehenden Ansprüche, bei der das Rohrelement (13) in einer Längsrichtung (50) der Ventilanordnung angeordnet ist, wobei die von dem Formgedächtnisaktuator erzeugbare Kraft drehend um eine Achse verläuft, welche quer zu der Längsrichtung (50) verläuft.

6. Ventilanordnung nach einem der vorhergehenden Ansprüche, bei der der Arbeitsraum (4) ein Aufnahmevolumen für die abgescherten Teile des Rohrelements (13) umfasst.

7. Ventilanordnung nach einem der vorhergehenden Ansprüche, bei der das Rohrelement (13) durch eine Sacklochbohrung des Einlasses (2) gebildet ist, welche von einer von dem Arbeitsraum (4) abgewandten Seite in einen endseitigen Boden des Einlasses (2) eingebracht ist.

8. Ventilanordnung nach Anspruch 7, bei der der Boden und der Aktuator (5) oder der Boden und eines oder mehrere der Zwischenteile (26, 27, 28) in Längsrichtung (50) voneinander beabstandet sind.

9. Ventilanordnung nach einem der vorhergehenden Ansprüche, bei der der Formgedächtnisaktuator eine Feder (24) ist, welche sich bei Erreichen der Umwandlungstemperatur ausdehnt.

10. Ventilanordnung nach einem der vorhergehenden Ansprüche, bei der in dem Arbeitsraum (4) vor dem Auslass (3) oder dem Einlass (2) eine Blende angeordnet ist.

## Claims

1. One-time actuated valve assembly, in particular for a spacecraft engine, which is arrangeable in a pipeline for liquid or gaseous media and which comprises an inlet (2) and an outlet (3) which open into a working chamber () of the valve assembly, and an actuator (5), wherein, in a non-actuated state of the actuator (5), a flow passage between the inlet (2) and the outlet (3) is blocked, wherein
- the actuator (5) is a one-time actuatable shape-memory actuator or comprises a shape-memory actuator, which suddenly changes its external shape upon reaching a conversion temperature that depends on its alloy composition, and which is generatable by a controllable electrical heating device (6) of the valve assembly; and
- the actuator (5) in the working chamber (4), upon actuation, irreversibly destroys an element (13) separating the inlet (2) from the outlet (3), whereby the inlet (2) and the outlet (3) are fluidically connected to each other via the working chamber (4);
**characterized in that**
the inlet (2) or the outlet (3) open into a pipe element (13) which is arranged in the working chamber (4) in such a manner that the pipe element (13) is sheared off upon actuation of the shape-memory actuator.

2. Valve assembly according to claim 1,
wherein the shape-memory actuator at least sectionally adjoins the pipe element (13) in the non-actuated state, wherein the shape change of the shape-memory actuator results in shearing off of the pipe element (13) by the shape-memory actuator itself.

3. Valve assembly according to one of the preceding claims, wherein one or more intermediate parts (26, 27, 28) at least sectionally adjoin the pipe element (13) in the non-actuated state, so that the shape change of the shape-memory actuator is transmittable to the intermediate part or parts (26, 27, 28), whereby the pipe element (13) is configured to be sheared off by at least one of the intermediate parts (26, 27, 28).

4. Valve assembly according to one of the preceding claims, wherein the pipe element (13) is arranged in a longitudinal direction (50) of the valve assembly, wherein a force that is generatable by the shape-memory actuator extends transversely to the longitudinal direction (50).

5. Valve assembly according to one of the preceding claims, wherein the pipe element (13) is arranged in a longitudinal direction (50) of the valve assembly, wherein a force that is generatable by the shape-memory actuator extends rotating about an axis extending transversely to the longitudinal direction (50).

6. Valve assembly according to one of the preceding claims, wherein the working chamber (4) comprises a receiving volume for the sheared-off parts of the pipe element (13).

7. Valve assembly according to one of the preceding claims, wherein the pipe element (13) is formed by a pocket borehole of the inlet (2), which is introduced from a side facing away from the working chamber (4) into a terminal base of the inlet (2).

8. Valve assembly of claim 7, wherein the base and actuator (5) or the base and one or more of the intermediate parts (26, 27, 28) are spaced apart from one another in longitudinal direction (50).

9. Valve assembly according to one of the preceding claims, wherein the shape-memory actuator is a spring (24), which expands upon reaching the conversion temperature.

10. Valve assembly according to one of the preceding claims, wherein a screen is arranged in the working chamber (4) in front of the outlet (3) or the inlet (2).

## Revendications

1. Système de vanne à actionnement unique, en particulier pour un système de propulsion aérospatiale, pouvant être disposé à l'intérieur d'une conduite pour fluides liquides ou gazeux et comprenant une entrée (2) et une sortie (3) qui débouchent dans un espace de travail (4) du système de vanne, ainsi qu'un actionneur (5), le passage d'un fluide entre l'entrée (2) et la sortie (3) étant bloqué à l'état non actionné de l'actionneur (5), dans le cadre duquel
- l'actionneur (5) est un actionneur à mémoire de forme à actionnement unique ou comprend un actionneur à mémoire de forme qui modifie de manière abrupte sa forme extérieure lorsqu'est atteinte une température de transformation qui est fonction de la composition de l'alliage utilisé et peut être produite par un dispositif chauffant à commande électrique (6) du système de vanne, et
- l'actionneur (5) détruit dans l'espace de travail (4), de manière irréversible, un élément (13) séparant l'entrée (2) de la sortie (3), l'entrée (2) et la sortie (3) se trouvant ainsi raccordées de manière fluidique l'une à l'autre par l'intermédiaire de l'espace de travail (4),
**caractérisé en ce que**
l'entrée (2) ou la sortie (3) débouche dans un élément tubulaire (13) disposé dans l'espace de travail (4) de sorte que l'élément tubulaire (13) est cisaillé lorsqu'est actionné l'actionneur à mémoire de forme.

2. Système de vanne selon la revendication 1, dans le cadre duquel l'actionneur à mémoire de forme est au moins par endroits adjacent à l'élément tubulaire (13) à l'état non actionné, la modification de forme de l'actionneur à mémoire de forme conduisant au cisaillement de l'élément tubulaire (13) par l'actionneur à mémoire de forme même.

3. Système de vanne selon l'une des revendications précédentes, dans le cadre duquel une ou plusieurs pièces intermédiaires (26, 27, 28) sont, à l'état non actionné, au moins par endroits adjacentes à l'élément tubulaire (13) si bien que la modification de forme de l'actionneur à mémoire de forme peut être transmise à la ou les pièces intermédiaires (26, 27, 28), l'élément tubulaire (13) pouvant alors être cisaillé par au moins une des pièces intermédiaires (26, 27, 28).

4. Système de vanne selon l'une des revendications précédentes, dans le cadre duquel l'élément tubulaire (13) est disposé dans une direction longitudinale (50) du système de vanne, la force pouvant être produite par l'actionneur à mémoire de forme étant perpendiculaire à la direction longitudinale (50).

5. Système de vanne selon l'une des revendications précédentes, dans le cadre duquel l'élément tubulaire (13) est disposé dans une direction longitudinale (50) du système de vanne, la force pouvant être produite par l'actionneur à mémoire de forme étant tournante autour d'un axe qui s'étend perpendiculairement à la direction longitudinale (50).

6. Système de vanne selon l'une des revendications précédentes, dans le cadre duquel l'espace de travail (4) comprend un volume destiné à recevoir les pièces cisaillées de l'élément tubulaire (13).

7. Système de vanne selon l'une des revendications précédentes, dans le cadre duquel l'élément tubulaire (13) est formé par un alésage borgne de l'entrée (2), lequel alésage est placé dans un fond d'extrémité de l'entrée (23), du côté opposé à la espace de travail (4).

8. Système de vanne selon la revendication 7, dans le cadre duquel le fond et l'actionneur (5) ou le fond et une ou plusieurs des pièces intermédiaires (26, 27, 28) sont espacés les uns des autres dans la direction longitudinale (50).

9. Système de vanne selon l'une des revendications précédentes, dans le cadre duquel l'actionneur à mémoire de forme consiste en un ressort (24) qui se détend lorsqu'est atteinte une température de transformation.

10. Système de vanne selon l'une des revendications précédentes, dans le cadre duquel un diaphragme est disposé devant la sortie (3) ou l'entrée (2), dans l'espace de travail (4).
